# EUROPÄISCHE PATENTANMELDUNG

(11) **EP 2 374 767 A2**
(43) Veröffentlichungstag der Anmeldung: **12.10.2011**
(21) Anmeldenummer: 11160449.2
(22) Anmeldetag: 30.03.2011
(51) Int. Cl.: C04B 18/02, C04B 28/02

(54) **Füllstoff sowie Verfahren zu dessen Herstellung**

(30) Priorität: 01.04.2010 DE 102010013881
(71) Anmelder: Terion AG, 9470 Buchs (CH)
(72) Erfinder: Dreismann, Martin, 97228 Rottendorf (DE); Merkel, Peter, 97318 Kitzingen (DE); Steinmüller, Jürgen, 97350 Mainbernheim (DE)
(74) Vertreter: Sonnenberg, Fred

(57) **Zusammenfassung**

Die vorliegende Erfindung betrifft einen Baustoff, sowie einen in diesem Baustoff enthaltenen Füllstoff und ein Verfahren zur Herstellung des Baustoffes. Erfindungsgemäß wird ein Füllstoff zur Verfügung gestellt, welcher eine Materialmischung, Alumimum-Verbindungen, basisch reagierende Komponenten und optional Wasser umfasst. Im Sinne der vorliegenden Erfindung soll unter eine Materialmischung ein durch mechanische und/oder chemische Verfahren gewonnnes Material verstanden werden, welches aus dem Zerkleinern von teilsortierten Abfallfraktionen entsteht.

## Beschreibung

### GEBIET DER ERFINDUNG

Die vorliegende Erfindung betrifft einen Baustoff, sowie einen in diesem Baustoff enthaltenen Füllstoff und ein Verfahren zur Herstellung des Baustoffes.

### HINTERGRUND DER ERFINDUNG

Konventioneller Beton ist ein Gemisch aus Zement, einer Gesteinskömung bzw. eines Betonzuschlages und Anmachwasser. Bei dem Betonzuschlag handelt es sich üblicherweise um Sand, Kies oder Split. Die Zusammensetzung des Betons ist von vielen Parametern, wie z. B. der Festigkeitsklassen und Umweltbedingungen abhängig. Bei einem normalen Beton der Festigkeitsklasse C25/30 hat ein Kubikmeter Beton als Mengenanteile 285 kg Zement, 200 1 Wasser sowie 1900 kg Zuschläge, was ein Mischungsverhältnis von 1 - 0,6 : 0,7 entspricht. Der Wasserzementwert liegt zwischen 0,5 bis 0,65, die Trockenrohdichte bei ca. 2.300 kg/m³ und die Wärmeleitfähigkeit beträgt ca. 2,1 W/mK.

Beton ist ein Baustoff, welcher sich durch extreme Härte auszeichnet und somit hohen Druck aushalten kann. Allerdings ist Beton nicht in der Lage hohe Zugbeanspruchungen auszuhalten, daher wird häufig Stahlbeton hergestellt, in dem Stahlteile in den Beton eingebracht werden, welche auftretende Zugspannungen aufnehmen. Besonders vorteilhaft bei dieser Kombination ist, dass Beton und Stahl ähnliche thermische Ausdehnungskoeffizienten haben und zudem durch den leicht alkalischen Beton der Stahl vor Korrosion geschützt wird.

Beton, bei dem der Zementleim noch nicht abgebunden ist, wird als grüner Beton oder Frischbeton bezeichnet. Nachdem der Zementleim vollkommen abgebunden hat wird der Beton im Weiteren als Festbeton bezeichnet.

Aus Beton können vorgefertigte Bauteile hergestellt werden, in dem diese in eine Form gegossen werden und der ausgehärtete Beton bzw. das entsprechende Teil dann im Bau verwendet wird. Weiterhin ist es möglich Beton direkt vor Ort in einer individuell geformten Schalung zu formen. Dies geschieht dadurch, dass der Beton in die Schalung eingefüllt und verdichtet wird und nach Abbinden des Zementes die Schalung entfernt werden kann.

### ZUSAMMENFASSUNG DER ERFINDUNG

Aufgabe der vorliegenden Erfindung ist es, einen alternativen Füllstoff, einen unter Verwendung desselben hergestellten Baustoff sowie ein Verfahren zur Herstellung des Baustoffs anzugeben, wobei der Baustoff analog zu Beton, Putz oder generell zementhaltigen Baustoffen verwendet werden kann.

Erfindungsgemäß wird ein Füllstoff zur Verfügung gestellt, welcher eine Material-Mischung, Aluminium-Verbindungen, basisch reagierende Komponenten und optional Wasser umfaßt. Im Sinne der vorliegenden Erfindung soll unter einer Materialmischung ein durch mechanische und/oder chemische Verfahren gewonnnes Material verstanden werden, welches aus dem Zerkleinern von teilsortierten Abfallfraktionen entsteht.

Erfindungsgemäß kann die Materialmischung zerkleinerte synthetisch organische Stoffe, anorganische Stoffe und optional zusätzlich verrottbar organische Stolle enthalten. Die Korngröße der geschredderten. Abfallfraktion kann unterhalb von 2 mm liegen.

Erfindungsgemäß kann die Zusammensetzung der Materialmischung unter Bezug auf das Trockengewicht aus 5 - 100 % anorganischen Stoffen, von bis zu 90 % synthetisch organischen Stoffen und optional zusätzlich aus bis zu 8 % verrottbar organischen Stoffen bestehen.

Ein weiterer Gegenstand der vorliegenden Erfindung ist ein Baustoff, welcher einen Füllstoff gemäß den vorherigen Ausführungen umfasst sowie zusätzlich Zement, Wasser und optional weitere geeignete Zuschlagstoffe.

Letztlich ist der oben beschriebene Füllstoff dafür vorgesehen um ganz oder teilweise übliche Betonzuschläge zu ersetzen. Aus diesem Grund und aufgrund der geltenden Normen für Beton kann der Baustoff, welcher unter Zusatz des offenbarten Füllstoffes hergestellt wird, nicht als Beton bezeichnet werden, sondern ist ein betonähnlicher Baustoff.

Es ist vorgesehen, dass der Baustoff 5 - 100 % (ohne Wasser und Zementanteil) eines Füllstoffes wie oben beschrieben enthalten kann.

Weiterhin umfasst die vorliegende Erfindung ein Verfahren zur Herstellung eines Baustoffes, umfassend die Herstellung eines Füllstoffes durch Mischen von synthetisch organischen Stoffen, verrottbaren organischen und/oder anorganischen Stoffen gefolgt von dem Zerkleinern der Inhaltsstoffe der Mischung zu einer Materialmischung, dem Mischen der Materialmischung mit Alumimum-Verbindungen und anschließendem optionalen Zugeben von Branntkalk oder anderen basischen Komponenten. Diese Mischung wird intensiv homogenisiert und anschließend für einige Zeit ruhen gelassen. Der Bauzuschlagsstoff wird mit Zement und optional weiteren geeigneten Zuschlagstoffen gemischt und anschließend wird Wasser zugegeben.

Weiterhin ist vorgesehen, dass bei dem erfindungsgemäßen Verfahren die Mischung zur Herstellung des Bauzuschlagstoffes 5 - 100 % anorganische Stoffe, bis zu 90 % synthetisch organische Stoffe und optional zusätzlich bis zu 8 % verrottbar organische Stoffe umfassen kann.

Sofern ein Formteil mit einer Mischung gemäß der Offenbarung dieser Erfindung hergestellt werden soll, ist als zusätzlicher Verfahrensschritt des erfindungsgemäßen Verfahrens vorgesehen, dass die fertige Mischung in eine Form oder Schalung gegeben wird und optional auch verdichtet wird.

Damit ein Formteil, das aus einer erfindungsgemäßen Mischung hergestellt worden ist verwendet werden kann, ist weiter vorgesehen, dass die ausgehärtete Mischung aus der Form oder einer Schalung entfernt werden kann. Anschließend kann der Baustoff nach einer weiteren Aushärtung verwendet werden.

Ein erfindungsgemäßer Baustoff kann auch als Stein, Hohlblockstein oder Ziegel verwendet werden, sofern er zuvor in einer entsprechenden Form aushärten und später endgültig aushärten konnte, im übrigen kann er der Baustoff gemäß der Offenbarung der Erfindung auch als Putz, Beschichtung, Ausgleichsmasse, Grundierung, oder Sauberkeitssehicht verwendet werden.

Der erfindungsgemäße Baustoff kann aber auch als Putz oder Beschichtung, d. h. in nicht ausgehärteter Form verarbeitet oder verwendet werden.

### DETAILLIERTE BESCHREIBUNG DER ERFINDUNG

Bei dem in dieser Erfindung zur Verfügung gestellten betonähnlichen Baustoff, welcher aus dem Bindungsmittel Zement, einem neuartig entwickelten Füllstoff und Wasser hergestellt wird, ergibt sich der Vorteil, dass der Sandanteil, Kiesanteil im Vergleich zu Beton teilweise oder ganz ersetzt werden kann. Als besonders vorteilhaft des neuen Baustoffes zeigt sich, dass der Füllstoff aus Abfallfraktionen hergestellt werden kann. Dadurch wird eine Wiederverwendung von Abfallstoffen ermöglicht.

Durch den Zusatz des in dieser Erfindung beschriebenen Füllstoffes wird ein entsprechendes Formteil aus dem Baustoff bis zu 40 % leichter als mit konventionellem Beton gefertigte vergleichbare Bau- oder Formteile. Daraus resultieren letztlich geringere Transportkosten und auch eine höhere Zuladungsmenge beim Transport entsprechender Teile.

Die Druckfestigkeit eines Steines aus dem erfindungsgemäßen Baustoff erfüllt das Anforderungsprofil für Hohlblocksteine aus Leichtbeton nach DIN V 18151-100.

Die durch das Zerkleinern der Ausgangsstoffe zur Herstellung des Bauzuschlagsstoffes optional zu erhaltende fasrige Struktur, welche sich auf den Bauzuschlagsstoff überträgt, führt zu einer geringeren Trockenrohdichte des Baustoffes, was sich wiederum mit einer geringeren Wärmeleitfähigkeit niederschlägt. Letztlich führen die porösen Strukturen eines Bau- oder Formteiles aus einem Baustoff gemäß der Erfindung zu höheren Dämmwerten, im Übrigen kann die Schallübertragung bei einem entsprechenden Stoff geringer sein, als bei der Verwendung von Teilen, welche aus herkömmlichen Beton gefertigt werden.

Die Erfindung wird nachfolgend anhand von Ausführungsbeispielen beschrieben, ohne auf diese beschränkt zu sein. Dies gilt insbesondere bezüglich der verwendeten Materialen.

Es wurden zwei verschiedene Zusammensetzungen unter Verwendung des zuvor beschriebenen Füllstoffes hergestellt. Diese beiden hatten die folgende Zusammensetzung

| Zusammensetzung | Sand/Kies | Bauzuschlagsstoff | Zement | Wasser |
|---|---|---|---|---|
| Mischung 30 % Sandersatz | 54% | 7% | 26% | 13% |
| 100 % Sand-/Kiesersatz | - | 39% | 41% | 20% |
| Die Feuchte beider Mischungen betrug 52 % | | | | |

Die angegebenen Inhaltsstoffe wurden in einem handelsüblichen Botonmischer für ca. zwei Minuten gut durchmischt. Anschließend wurde das Wasser hinzugegeben und das Ganze so lange gemischt, bis das Gemenge eine pastöse Konsistenz aufwies.

Beide Mischungen wurden anschließend in eine Form gegossen und es wurde darauf geachtet, dass das Gemenge unter Rütteln verdichtet und dabei gleichmäßig innerhalb der Form verteilt wurde.

Nach weniger als 12 Stunden Aushärtung bei Raumtemperatur wurden die Formteile ausgeschalt und anschließend bei 20°C feucht gelagert. Nach weiteren 28 Tagen ist der Aushärtungsprozess abschlossen und das Formteil konnte verwendet werden. An Mörtelprismen, nach DIN EN 196 wurden die in Tabelle 1 aufgeführten Werte für Rohdichte und Festigkeit ermittelt.

**Tabelle 1: Werte für Rohdichte und Festigkeit nach DIN EN 196 der angegebenen Mischungen**

| | Rohdichte trocken (kg/m³) | Biegezugfestigkeit (N/mm²) | Druckfestigkeit (N/mm²) | Wärmeleitfahigkeit (W/mK) |
|---|---|---|---|---|
| Konventioneller Mörtelprismen | 2.300 | 8,90 | 58,60 | 2,10 |
| **C.M500™** 30% Sandersatz | 1.984 | 5,0 | 25,0 | 1,50 |
| **C.M500™ 100% Sandersatz** | **976** | **3,75** | **16,0** | **0,49** |
| Hohlblocksteine DIN V 18151-100 Festigkeitsklasse 8 | | | 10,0 | |

Wie aus Tabelle 1 ersichtlich ist die Wärmeleitfähigkeit eines Steines, hergestellt aus einem erfindungsgemäßen Baustoff, gegenüber konventionellen Betonsteinen deutlich herabgesetzt, obwohl noch die Druckfestigkeit für Hohlblocksteine aus Leichtbeton gemäß DIN V 18151-100 erfüllt werden, da der Wert der Druckfestigkeit 16,0 N/mm² bei einem 100 % Ersatz der Sand- bzw. Gesteinsmischung beträgt. So ist beispielhaft gezeigt, dass für diese Klasse die Normerfordernisse erfüllt werden.

Als Anwendungsgebiet für den erfindungsgemäßen Baustoff sind alle Bereiche des Bauwesens anzusehen, in denen allgemeine bauaufsichtliche Zulassung nicht notwendig ist. Dabei handelt es sich beispielsweise um Formteile, Steine und Platten für den Garten- und Landwirtschaftsbau im Außenbereich sowie beispielsweise auch Lärmschutzeinrichtungen.

Im Sinne der vorliegenden Offenbarung sollen unter Formteilen oder einem Formteil jegliche betonähnliche Bauteile verstanden werden, die aus einer ausgehärteten Mischung gemäß der Offenbarung in jeglichen Formen erstellt wurden.

## Patentansprüche

1. Füllstoff zur Herstellung eines Baustoffes, umfassend eine Material-Mischung, Aluminium-Verbindungen, optional eine basisch reagierende Komponente, insbesondere Branntkalk und optional Wasser.

2. Füllstoff nach Anspruch 1, umfassend eine Material-Mischung aus zerkleinerten synthetischen organischen Stoffen, anorganischen Stoffen und optional zusätzlich verrottbar organischen Stoffen.

3. Füllstoff nach Anspruch 1 oder 2, umfassend eine Material-Mischung bezogen auf das Trockengewicht aus 5 - 100 % anorganischen Stoffen, optional bis zu 90 % synthetisch organischen Stoffen und optional bis zu 8 % verrottbar organischen Stoffen.

4. Baustoff umfassend einen Füllstoff nach einem der Ansprüche 1 bis 3 sowie zusätzlich Zement, Wasser und optional weitere Zuschläge, insbesondere Sand, Kies, Eisenspäne, Gesteinsmischungen, etc.

5. Baustoff nach Anspruch 4, umfassend 5 - 100 % eines Füllstoffes gemäß den Ansprüchen 1 bis 4, ohne Zement und Wasseranteil.

6. Baustoff nach einem der Ansprüche 4 oder 5, wobei der weitere Zuschlag Gesteinsmischungen, insbesondere Sand, Kies, Split oder andere geeignete Zuschläge enthält.

7. Baustoff nach einem der Ansprüche 4 bis 6, wobei der Baustoff eine ausgehärtete Mischung umfasst.

8. Ein Verfahren zur Herstellung eines Baustoffes, umfassend
a. Herstellung eines Füllstoffes durch
i. Mischen von synthetisch organischen Stoffen und oder anorganischen Stoffen und oder verrottbar organischen Stoffen
ii. Zerkleinern der Inhaltsstoffe der Mischung,
iii. Zugabe von Aluminium-Verbindungen
iv. Mischen der Material-Mischung
v. Optional Zugeben von basisch wirkenden Komponenten, wie etwa Branntkalk
vi. Intensivem Homogenisieren der Mischung
vii. Ruhen der Mischung
b. Mischen des Füllstoffes mit Zement und optional weiteren Zuschlagstoffen
c. Zugabe von Wasser

9. Verfahren nach Anspruch 8, wobei die Mischung zur Herstellung des Füllstoffes 5 - 100 % anorganischen Stoffen, bis zu 90 % synthetisch organischen Stoffen und optional zusätzlich bis zu 8 % verrottbar organischen Stoffen umfasst.

10. Verfahren nach einem der Ansprüche 8 oder 9, wobei die fertige Mischung in eine Form oder Schalung gegeben wird.

11. Verfahren nach einem der Ansprüche 8 bis 10, wobei die ausgehärtete Mischung nach dem Aushärten von der Form oder Schalung entfernt werden.

12. Verfahren nach einem der Ansprüche 8 bis 11, wobei der Baustoff vor einer weiteren Verwendung vollständig aushärtet.

13. Verwendung eines Baustoffs nach einem der Ansprüche 4 bis 7 als Stein, Hohlblockstein, Ziegel, Putz, Beschichtung, oder Formteil
